# EUROPEAN PATENT SPECIFICATION

(11) **EP 1 486 926 B1**
(45) Date of publication and mention of the grant of the patent: **02.08.2006**
(21) Application number: 03013297.1
(22) Date of filing: 13.06.2003
(51) Int. Cl.: G08B 25/00, B60R 16/02, B60R 25/10

(54) **System and method for automatic crash notification**
System und Verfahren für eine automatische Unfall-Meldeeinrichtung
Système et Procédé de notification d'un accident

(43) Date of publication of application: 15.12.2004
(73) Proprietor: Ford Global Technologies, LLC., Dearborn MI 48126 (US)
(72) Inventor: Fast, Peder, 429 34 Kullavik (SE)
(74) Representative: Hammond, Andrew David

(56) References cited:
- DE-A- 3 839 959
- DE-C- 10 160 292
- DE-C- 19 954 822

## Description

### Technical field

The present patent application relates to automatic crash notification and in particular a system for automatic crash notification for an automotive vehicle having improved crashworthiness in accordance with the preamble of claim 1.

The present invention further relates to a method for automatic crash notification and in particular a method for automatic crash notification for an automotive vehicle providing improved crashworthiness in accordance with the preamble of claim 8.

### Background of the invention

Automatic crash notification systems is offered in several car models. A crash notification system is usually triggered by the airbag system, supplementary restraint system or other system, in case of accident.

The triggering system is directly connected to an emergency call module comprising a wireless communications means, such as a cellular phone or satellite radio. A message including position and other relevant information is sent to an alarm center. The position is normally acquired from a GPS receiver. The GPS receiver may be included in the emergency call module, a separate unit or be included in other systems such as a navigation system.

One such system and method is previously known through US 6 073 004 (preamble of claim 1), in which is described a system and method for enabling emergency call initiations in response to the detection of a vehicle accident. A number of sensors are located about the vehicle, for example, air bag deployment sensors. Activation of the sensors to deploy the air bags also generates an emergency call activation signal upon detection of a vehicle accident. The emergency call activation signal is transmitted to an associated cellular telephone unit via wire line or non-wire line communications, and a timer initiates a timeout period. Once the timer has measured the proper timeout period, an emergency call setup is begun. The emergency call setup may be discontinued at any point by a user abort command. Otherwise, the mobile switching center serving the cellular telephone is alerted to initiate an emergency call. The mobile switching center utilizes location information from the base station of the cellular telephone and emergency information from the home location register of the cellular telephone to contact and provide an emergency operator with emergency information.

A disadvantage with the arrangement known from the prior art mentioned above is that in case the wire line or wireless communications between the sensors and the cellular telephone is compromised, the system will fail to initiate an emergency call. A further disadvantage is that the provision of a dedicated wire line or wireless communications channel between the sensors and the cellular telephone adds to the cost and complexity of the system. A yet further disadvantage is that location information provided by the base station of the cellular telephone usually tend to be rather imprecise, which might make the task of locating the vehicle fairly cumbersome.

### Summary of the invention

One object of the invention is to provide an improved system for automatic crash notification and in particular an improved system for automatic crash notification in automotive vehicles providing for a highly crashworthy, low cost, platform independent crash notification system addressing the problems described in relation to the prior art arrangement.

This object is achieved in accordance with the characterizing portion of claim 1.

Thanks to the provision of means for determining the operational status of said vehicle bus, and integrated means for determining inferring a crash like situation and triggering communication of a crash notification message upon such determination if said vehicle bus is determined to have suffered an unexpected malfunction or failure it is possible to use a standard vehicle bus, e.g. a Controller Area Network (CAN) serial bus for initiating a crash notification message from sensors distributed in the vehicle without jeopardizing the crashworthiness while enabling the same hardware to be used in several different car models having such a vehicle bus.

One further object of the invention is to provide an improved method for automatic crash notification and in particular an improved method for automatic crash notification in automotive vehicles providing for a highly crashworthy, low cost, platform independent crash notification method addressing the problems described in relation to the prior art arrangement.

This object is achieved in accordance with the characterizing portion of claim 8.

Thanks to the provision of steps for determining the operational status of a vehicle bus, such as a Controller Area Network (CAN) serial bus, and if said vehicle bus is determined to have suffered an unexpected malfunction or failure, detecting and characterizing crash information provided by integrated means for determining inferring a crash like situation it becomes possible to ensure triggering communication of crash notification messages without jeopardizing the crashworthiness while enabling use of the same hardware in several different car models utilizing such a vehicle bus.

Preferred embodiments are listed in the dependent claims.

### Description of drawings

In the following, the invention will be described in greater detail with reference to attached drawings, in which:

Fig. 1 is simplified partial side view of a vehicle comprising a system for automatic crash notification,

Fig. 2 is a simplified block schematic of the system for automatic crash notification for an automotive vehicle,

Fig. 3 is a flow chart illustrating the method by which a crash notification message is initiated.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

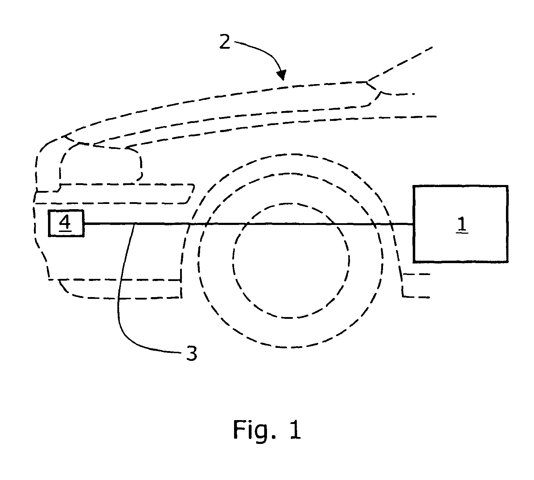

A simplified partial side view of a vehicle 2 comprising a system 1 for automatic crash notification is shown in figure 1. The system is connected to at least one crash sensor 4 arranged within said vehicle 2. The crash sensor 2 is arranged to communicate with the system 1 for automatic crash notification via an existing vehicle bus 3, such as a Controller Area Network (CAN) serial bus.

The Controller Area Network (CAN) is a serial communications protocol which efficiently supports distributed real-time control with a very high level of security. Its domain of application ranges from high speed networks to low cost multiplex wiring. In automotive electronics, engine control units, sensors, anti-skid-systems, etc. are connected using CAN with bit rates up to 1 Mbit/s. At the same time it is cost effective to build into vehicle body electronics, e.g. lamp clusters, electric windows etc. to replace the wiring harness otherwise required. This kind of bus is usually not redundant or crash proof, and it is therefore usually not sufficient to rely on as a sole system for triggering crash related events.

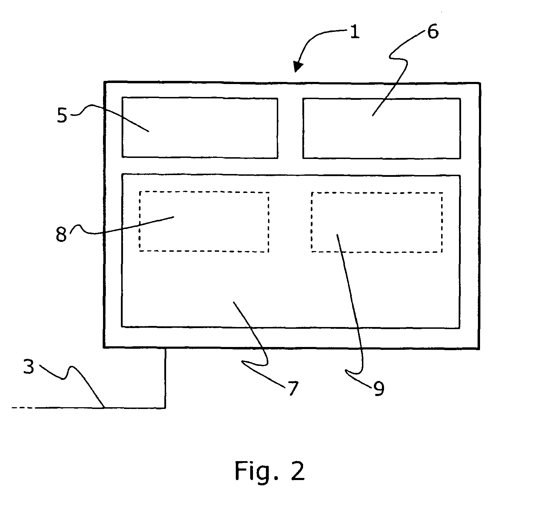

Fig. 2 shows a simplified block schematic of the system 1 for automatic crash notification for an automotive vehicle. The system 1 comprises wireless communications means 5, such as a cellular phone or satellite radio or any other means for wireless communication which can be used to transmit information to e.g. a public telephone network or similar via an associated antenna (not shown) or similar. The system 1 optionally comprises means 6 for receiving data from a positioning system to derive positional information. These means 6 for receiving data from a positioning system can e.g. comprise means for receiving code sequences from global positioning system (GPS) satellites to derive said positional information or alternatively rely on positioning systems integrated in the cellular telephony network or similar systems enabling correct positioning of said vehicle 2.

The system 1 further comprises means 7 for triggering communication of crash notification messages, said messages optionally comprising said positional information, using said wireless communications means 5, where said triggering means 7 are arranged to detect and characterize crash information provided to said vehicle bus 3 by at least one crash sensor 4 arranged within said vehicle 2. Said means 7 for triggering communication of crash notification messages further comprise means 8 for determining the operational status of said vehicle bus 3, and integrated means 9 for determining inferring a crash like situation and triggering communication of a crash notification message upon such determination if said vehicle bus 3 is determined to have suffered an unexpected malfunction or failure.

In one embodiment said means 9 for determining inferring a crash like situation comprise means for computing the speed of said vehicle 2 based on said positional information and determining if said speed exceeds a predetermined first threshold value. If it is determined that the speed exceeds the predetermined first threshold value and the vehicle bus 3 is determined to have suffered an unexpected malfunction or failure, communication of a crash notification message is initiated.

In a further embodiment said means 9 for determining inferring a crash like situation comprise means for computing the speed of said vehicle 2 based on said positional information and determining if said speed exceeds a predetermined first threshold value and said speed is reduced from above said first threshold value to below a second predetermined threshold value within a predetermined time period. If the above is determined and the vehicle bus 3 is determined to have suffered an unexpected malfunction or failure, communication of a crash notification message is initiated.

In a yet further embodiment said means 9 for determining inferring a crash like situation is arranged to determine if the ignition of the vehicle 2 has been switched on and interpret subsequent determination that the vehicle bus 3 has suffered an unexpected malfunction or failure as a crash like situation and initiate communication of a crash notification message.

In a still further embodiment said means 9 for determining inferring a crash like situation is arranged to determine if the ignition of the vehicle 2 has been switched on and the vehicle 2 thereafter has been in motion and interpret subsequent determination that said vehicle bus 3 has suffered an unexpected malfunction or failure as a crash like situation and initiate communication of a crash notification message.

In the above described embodiments the means for computing and determination can be realized in software executable through said system 1 being provided with memory means and a micro controller means, such as a microprocessor.

In all of the above embodiments it is envisaged that the system 1 for automatic crash notification will be disabled if a plug is connected to a service connector of said vehicle, e.g. during service of said vehicle at a repair shop. Hereby, communication of false crash notification messages during service of said vehicle 2 is avoided.

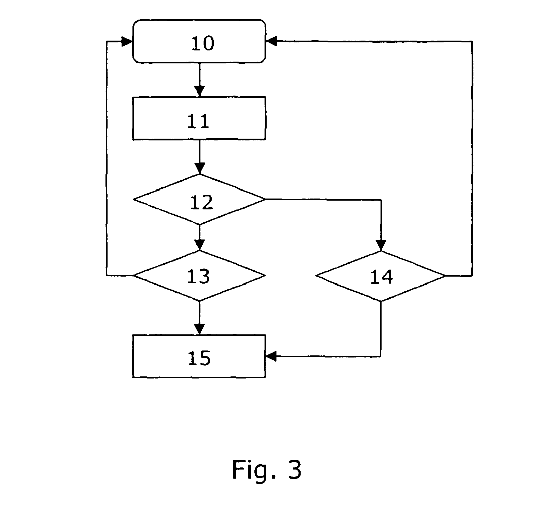

Figure 3 is a flow chart illustrating the method by which a crash notification message is initiated. Step 10 is a starting block at which the system waits for activation. In step 11, which is optional, the system performs the step of receiving data from a positioning system to derive positional information. In step 12 the operational status of a vehicle bus, such as a Controller Area Network (CAN) serial bus, is determined. If the operational status of the vehicle bus 3 is determined in step 12 to be operational, the flow is passed on to step 13 for the step of detecting and characterizing crash information provided to said vehicle bus 3 by at least one crash sensor 4 within said vehicle 2. If, on the other hand, the operational status is determined in step 12 to be that the vehicle bus 3 has suffered an unexpected malfunction or failure, the flow is passed on to step 14 for the step of detecting and characterizing crash information provided by integrated means for determining inferring a crash like situation. If no crash information is detected in steps 13 or 14, the system is brought back to step 10 and the method repeated. If, on the other hand, crash information is detected in either of steps 13 or 14, communication of crash notification messages, optionally comprising said positional information, using wireless communications means are triggered.

In a further embodiment the step 14 of determining inferring a crash like situation further comprises the steps of computing the speed of said vehicle based on said positional information and determining if said speed exceeds a predetermined first threshold value.

In yet a further embodiment the step 14 of determining inferring a crash like situation further comprises the steps of computing the speed of said vehicle based on said positional information and determining if said speed exceeds a predetermined first threshold value and determining if said speed is reduced from above said first threshold value to below a second predetermined threshold value within a predetermined time period.

In a still further embodiment the step of receiving data from a positioning system to derive positional information further comprises receiving code sequences from global positioning system (GPS) satellites to derive said positional information.

In an additional embodiment the step 14 of determining inferring a crash like situation further comprises the steps of determining if the ignition of the vehicle has been switched on, and arranging said integrated means for determining inferring a crash like situation to interpret subsequent determination that said vehicle bus has suffered an unexpected malfunction or failure as a crash like situation.

In yet an additional embodiment the step 14 of determining inferring a crash like situation further comprises the steps of determining if the ignition of the vehicle has been switched on and the vehicle thereafter has been in motion, and arranging said integrated means for determining inferring a crash like situation to interpret subsequent determination that said vehicle bus has suffered an unexpected malfunction or failure as a crash like situation.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A system (1) for automatic crash notification for an automotive vehicle, said system comprising:
wireless communications means (5),
means (7) for triggering communication of crash notification messages using said wireless communications means, where said triggering means are arranged to detect and characterize crash information provided to an existing vehicle bus (3), such as a Controller Area Network (CAN) serial bus, by at least one crash sensor within said vehicle,
**characterized in that** said means (7) for triggering communication of crash notification messages further comprise
means (8) for determining the operational status of said vehicle bus, and
integrated means (9) for determining inferring a crash like situation and triggering communication of a crash notification message upon such determination if said vehicle bus (3) is determined to have suffered an unexpected malfunction or failure.

2. A system (1) according to claim 1,
**characterized in that** said system further comprise means (6) for receiving data from a positioning system to derive positional information, and
in said means (7) for triggering communication of crash notification messages being arranged for triggering communication of crash notification messages comprising said positional information.

3. A system (1) according to any one of claim 2,
**characterized in that** said means (9) for determining inferring a crash like situation comprise means for computing the speed of said vehicle based on said positional information and determining if said speed exceeds a predetermined first threshold value.

4. A system (1) according to claim 3,
**characterized in that** said means (9) for determining inferring a crash like situation is arranged to determine if said speed is reduced from above said first threshold value to below a second predetermined threshold value within a predetermined time period.

5. A system (1) according to any one of claims 2 to 4,
**characterized in that** the means for receiving data from a positioning system comprise means for receiving code sequences from global positioning system (GPS) satellites to derive said positional information.

6. A system (1) according to any one of claims 1 to 5,
**characterized in that** said means (9) for determining inferring a crash like situation is arranged to determine if the ignition of the vehicle has been switched on and interpret subsequent determination that said vehicle bus (3) has suffered an unexpected malfunction or failure as a crash like situation.

7. A system (1) according to any one of claims 1 to 5,
**characterized in that** said means (9) for determining inferring a crash like situation is arranged to determine if the ignition of the vehicle has been switched on and the vehicle thereafter has been in motion and interpret subsequent determination that said vehicle bus (3) has suffered an unexpected malfunction or failure as a crash like situation.

8. A method for automatic crash notification for an automotive vehicle, **characterized in that** it comprises the steps of:
determining the operational status of a vehicle bus, such as a Controller Area Network (CAN) serial bus,
if said vehicle bus is determined to be operational, detecting and characterizing crash information provided to said vehicle bus by at least one crash sensor within said vehicle,
if said vehicle bus is determined to have suffered an unexpected malfunction or failure, detecting and characterizing crash information provided by integrated means for determining inferring a crash like situation,
triggering communication of crash notification messages using wireless communications means.

9. A method according to claim 8,
**characterized in that** it further comprises the steps of:
receiving data from a positioning system to derive positional information, and
including into said crash notification messages said positional information.

10. A method according to any one of claim 9,
**characterized in that** it for determining inferring a crash like situation further comprises the steps of:
computing the speed of said vehicle based on said positional information,
determining if said speed exceeds a predetermined first threshold value.

11. A method according to claim 10,
**characterized in that** it for determining inferring a crash like situation further comprises the step of:
determining if said speed is reduced from above said first threshold value to below a second predetermined threshold value within a predetermined time period.

12. A method according to any one of claims 9 to 11,
**characterized in that** the step of receiving data from a positioning system to derive positional information further comprises receiving code sequences from global positioning system (GPS) satellites to derive said positional information.

13. A method according to any one of claims 8 to 12,
**characterized in that** it for determining inferring a crash like situation further comprises the steps of:
determining if the ignition of the vehicle has been switched on, and
arranging said integrated means for determining inferring a crash like situation to interpret subsequent determination that said vehicle bus has suffered an unexpected malfunction or failure as a crash like situation.

14. A method according to any one of claims 8 to 12,
**characterized in that** it for determining inferring a crash like situation further comprises the steps of:
determining if the ignition of the vehicle has been switched on and the vehicle thereafter has been in motion, and
arranging said integrated means for determining inferring a crash like situation to interpret subsequent determination that said vehicle bus has suffered an unexpected malfunction or failure as a crash like situation.

15. An automotive vehicle,
**characterized in that** it comprises a system (1) according to any one of claims 1 to 7.

## Patentansprüche

1. System (1) zur automatischen Crash-Meldung für ein Kraftfahrzeug, wobei das System umfasst:
drahtlose Kommunikationsmittel (5),
Mittel (7) zum Auslösen einer Übermittlung von Crash-Meidungs-Nachrichten unter Verwendung der drahtlosen Kommunikationsmittel, wobei die Auslösemittel so beschaffen sind, dass sie Crash-Informationen, die für einen vorhandenen Fahrzeugbus (3) wie etwa einen seriellen Controller-Area-Network-Bus (CAN-Bus) durch wenigstens einen Crash-Sensor in dem Fahrzeug bereitgestellt werden, erfassen und charakterisieren,
**dadurch gekennzeichnet, dass** die Mittel (7) zum Auslösen der Übermittlung von Crash-Meidungs-Nachrichten ferner umfassen:
Mittel (8) zum Bestimmen des Betriebszustandes des Fahrzeugbusses und
integrierte Mittel (9) zum Bestimmen des Vorliegens einer crashartigen Situation und zum Auslösen einer Übermittlung einer Crash-Meldungs-Nachricht bei einer solchen Bestimmung, falls festgestellt wird, dass der Fahrzeugbus (3) eine unerwartete Fehlfunktion oder einen unerwarteten Ausfall erlitten hat.

2. System (1) nach Anspruch 1,
**dadurch gekennzeichnet, dass** das System ferner Mittel (6) umfasst, die Daten von einem Positionierungssystem empfangen, um Positionsinformationen abzuleiten, und
die Mittel (7) zum Auslösen einer Übermittlung von Crash-Meidungs-Nachrichten so beschaffen sind, dass sie eine Übermittlung von Crash-Meldungs-Nachrichten auslösen, die die Positionsinformationen enthalten.

3. System (1) nach Anspruch 2,
**dadurch gekennzeichnet, dass** die Mittel (9) zum Bestimmen des Vorliegens einer crashartigen Situation Mittel umfassen, die die Geschwindigkeit des Fahrzeugs anhand der Positionsinformationen berechnen und feststellen, ob die Geschwindigkeit einen vorgegebenen ersten Schwellenwert übersteigt.

4. System (1) nach Anspruch 3,
**dadurch gekennzeichnet, dass** die Mittel (9) zum Bestimmen des Vorliegens einer crashartigen Situation so beschaffen sind, dass sie feststellen, ob die Geschwindigkeit innerhalb einer vorgegebenen Zeitdauer von oberhalb des ersten Schwellenwertes auf unterhalb eines zweiten vorgegebenen Schwellenwertes abgenommen hat.

5. System (1) nach einem der Ansprüche 2 bis 4,
**dadurch gekennzeichnet, dass** die Mittel zum Empfangen von Daten von einem Positionierungssystem Mittel umfassen, die Codefolgen von Satelliten des globalen Positionierungssystems (GPS-Satelliten) empfangen, um die Positionsinformationen abzuleiten.

6. System (1) nach einem der Ansprüche 1 bis 5,
**dadurch gekennzeichnet, dass** die Mittel (9) zum Bestimmen des Vorliegens einer crashartigen Situation so beschaffen sind, dass sie feststellen, ob die Zündung des Fahrzeugs eingeschaltet ist, und eine nachfolgende Feststellung, dass der Fahrzeugbus (3) eine unerwartete Fehlfunktion oder einen unerwarteten Ausfall erlitten hat, als eine crashartige Situation interpretieren.

7. System (1) nach einem der Ansprüche 1 bis 5,
**dadurch gekennzeichnet, dass** die Mittel (9) zum Bestimmen des Vorliegens einer crashartigen Situation so beschaffen sind, dass sie feststellen, ob die Zündung des Fahrzeugs eingeschaltet worden ist und das Fahrzeug anschließend in Bewegung gewesen ist, und anschließend die Bestimmung, dass der Fahrzeugbus (3) eine unerwartete Fehlfunktion oder einen unerwarteten Ausfall erlitten hat, als eine crashartige Situation interpretieren.

8. Verfahren zur automatischen Crash-Meldung für ein Kraftfahrzeug, **dadurch gekennzeichnet, dass** es die folgenden Schritte umfasst:
Bestimmen des Betriebszustandes eines Fahrzeugbusses wie etwa eines seriellen Controller-Area-Network-Busses (CAN-Bus),
falls festgestellt wird, dass der Fahrzeugbus betriebsbereit ist, Erfassen und Charakterisieren von Crash-Informationen, die für den Fahrzeugbus durch wenigstens einen Crash-Sensor in dem Fahrzeug bereitgestellt werden,
falls festgestellt wird, dass der Fahrzeugbus eine unerwartete Fehlfunktion oder einen unerwarteten Ausfall erlitten hat, Erfassen und Charakterisieren von Crash-Informationen, die durch integrierte Mittel für die Bestimmung des Vorliegens einer crashartigen Situation bereitgestellt werden,
Auslösen einer Übermittlung von Crash-Meidungs-Nachrichten unter Verwendung drahtloser Kommunikationsmittel.

9. Verfahren nach Anspruch 8,
**dadurch gekennzeichnet, dass** es ferner die folgenden Schritte umfasst:
Empfangen von Daten von einem Positionierungssystem, um Positionsinformationen abzuleiten, und
Aufnehmen der Positionsinformationen in die Crash-Meidungs-Nachrichten.

10. Verfahren nach Anspruch 9,
**dadurch gekennzeichnet, dass** es für die Bestimmung des Vorliegens einer crashartigen Situation ferner die folgenden Schritte umfasst:
Berechnen der Geschwindigkeit des Fahrzeugs anhand der Positionsinformationen,
Feststellen, ob die Geschwindigkeit einen vorgegebenen ersten Schwellenwert übersteigt.

11. Verfahren nach Anspruch 10,
**dadurch gekennzeichnet, dass** es für die Bestimmung des Vorliegeris einer crashartigen Situation ferner den folgenden Schritt umfasst:
Bestimmen, ob die Geschwindigkeit innerhalb einer vorgegebenen Zeitdauer von oberhalb des ersten Schwellenwertes auf unterhalb eines zweiten vorgegebenen Schwellenwertes abgenommen hat.

12. Verfahren nach einem der Ansprüche 9 bis 11,
**dadurch gekennzeichnet, dass** der Schritt des Empfangens von Daten von einem Positionierungssystem, um Positionsinformationen abzuleiten, ferner das Empfangen von Codefolgen von Satelliten des globalen Positionierungssystems (GPS-Satelliten) umfasst, um die Positionsinformationen anzuleiten,

13. Verfahren nach einem der Ansprüche 8 bis 12,
**dadurch gekennzeichnet, dass** es zum Bestimmen des Vorliegens einer crashartigen Situation ferner die folgenden Schritte umfasst:
Bestimmen, ob die Zündung des Fahrzeugs eingeschaltet worden ist, und
Einrichten der integrierten Mittel zum Bestimmen des Vorliegens einer crashartigen Situation in der Weise, dass sie eine nachfolgende Bestimmung, dass der Fahrzeugbus eine unerwartete Fehlfunktion oder einen unerwarteten Ausfall erlitten hat, als eine crashartige Situation interpretieren.

14. Verfahren nach einem der Ansprüche 8 bis 12,
**dadurch gekennzeichnet, dass** es für die Bestimmung des Vorliegens einer crashartigen Situation ferner die folgenden Schritte umfasst:
Bestimmen, ob die Zündung des Fahrzeugs eingeschaltet worden ist und ob das Fahrzeug anschließend in Bewegung gewesen ist, und
Einrichten der integrierten Mittel für die Bestimmung des Vorliegens einer crashartigen Situation in der Weise, dass sie die nachfolgende Bestimmung, dass der Fahrzeugbus eine unerwartete Fehlfunktion oder einen unerwarteten Ausfall erlitten hat, als eine crashartige Situation interpretieren.

15. Kraftfahrzeug,
**dadurch gekennzeichnet, dass** es ein System (1), nach einem der Ansprüche 1 bis 7 umfasst.

## Revendications

1. Système (1) de notification automatique de collision pour un véhicule automobile, ledit système comportant :
des moyens de communication sans fil (5),
des moyens (7) pour déclencher une communication de messages de notification de collision en utilisant lesdits moyens de communication sans fil, où lesdits moyens de déclenchement sont agencés pour détecter et caractériser une information de collision fournie à un bus de véhicule existant (3), tel qu'un bus série de Réseau Local de Commande (CAN) par au moins un détecteur de collision situé dans ledit véhicule,
**caractérisé en ce que** lesdits moyens (7) pour déclencher une communication de messages de notification de collision comportent de plus
des moyens (8) pour déterminer l'état opérationnel dudit bus de véhicule, et
des moyens intégrés (9) pour déterminer un risque d'inférence d'une situation analogue à une collision et déclencher une communication d'un message de notification de collision lors d'une telle détermination si ledit bus de véhicule (3) est déterminé comme ayant souffert d'un mauvais fonctionnement ou d'un défaut inattendu.

2. Système (1) selon la revendication 1,
**caractérisé en ce que** ledit système comporte de plus des moyens (6) pour recevoir des données provenant d'un système de positionnement pour dériver une information de position, et
lesdits moyens (7) pour déclencher une communication de messages de notification de collision sont agencés pour déclencher une communication de messages de notification de collision comportant ladite information de position.

3. Système (1) selon la revendication 1 ou 2,
**caractérisé en ce que** lesdits moyens (9) pour déterminer un risque d'inférence d'une situation analogue à une collision comportent des moyens pour calculer la vitesse du véhicule sur la base de ladite information de position et déterminer si la vitesse dépasse une première valeur de seuil prédéterminée.

4. Système (1) selon la revendication 3,
**caractérisé en ce que** lesdits moyens (9) pour déterminer le risque d'inférence d'une situation analogue à une collision sont fournis pour déterminer si ladite vitesse est réduite à partir du dessus de ladite première valeur de seuil jusqu'en dessous d'une seconde valeur de seuil prédéterminée dans une période de temps prédéterminée.

5. Système (1) selon l'une quelconque des revendications 2 à 4,
**caractérisé en ce que** les moyens pour recevoir des données provenant d'un système de positionnement comportent des moyens pour recevoir des séquences de code provenant de satellites d'un système de positionnement global (GPS) pour dériver ladite information de position.

6. Système (1) selon l'une quelconque des revendications 1 à 5,
**caractérisé en ce que** lesdits moyens (9) pour déterminer un risque d'inférence d'une situation analogue à une collision sont agencés pour déterminer si l'allumage du véhicule a été rendu actif et interpréter la détermination ultérieure indiquant que ledit bus de véhicule (3) a souffert d'un mauvais fonctionnement ou d'un défaut inattendu tel qu'une situation analogue à une collision.

7. Système (1) selon l'une quelconque des revendications 1 à 5,
**caractérisé en ce que** lesdits moyens (9) pour déterminer un risque d'inférence d'une situation analogue à une collision sont agencés pour déterminer si l'allumage du véhicule a été rendu actif et le véhicule après ceci a été en mouvement et interpréter une détermination ultérieure indiquant que ledit bus de véhicule (3) a souffert d'un mauvais fonctionnement ou d'un défaut inattendu tel qu'une situation analogue à une collision.

8. Procédé de notification automatique de collision pour un véhicule automobile, **caractérisé en ce qu'**il comporte les étapes consistant à :
déterminer l'état opérationnel d'un bus de véhicule, tel qu'un bus série de Réseau Local de Commande (CAN),
si ledit bus de véhicule est déterminé comme étant opérationnel, détecter et caractériser une information de collision fournie audit bus de véhicule par au moins un détecteur de collision situé dans ledit véhicule,
si ledit bus de véhicule est déterminé comme ayant souffert d'un mauvais fonctionnement ou d'un défaut inattendu, détecter et caractériser une information de collision fournie par des moyens intégrés pour déterminer un risque d'inférence d'une situation analogue à une collision,
déclencher une communication de messages de notification de collision en utilisant des moyens de communication sans fil.

9. Procédé selon la revendication 8,
**caractérisé en ce qu'**il comporte en outre les étapes consistant à :
recevoir des données provenant d'un système de positionnement pour dériver une information de position, et
inclure dans lesdits messages de notification de collision ladite information de position.

10. Procédé selon l'une quelconque des revendications 9,
**caractérisé en ce que** pour déterminer un risque d'inférence d'une situation analogue à une collision il comporte en outre les étapes consistant à :
calculer la vitesse dudit véhicule sur la base de ladite information de position,
déterminer si la vitesse dépasse une première valeur de seuil prédéterminée.

11. Procédé selon la revendication 10,
**caractérisé en ce que** pour déterminer un risque d'inférence d'une situation analogue à une collision il comporte en outre l'étape consistant à :
déterminer si ladite vitesse est réduite depuis au-dessus de ladite première valeur de seuil jusqu'en dessous d'une seconde valeur de seuil prédéterminée dans une période de temps prédéterminée.

12. Procédé selon l'une quelconque des revendications 9 à 11,
**caractérisé en ce que** l'étape de réception de données provenant d'un système de positionnement pour dériver une information de position comporte en outre la réception de séquences de code provenant de satellites d'un système de positionnement global (GPS) pour dériver ladite information de position.

13. Procédé selon l'une quelconque des revendications 8 à 12,
**caractérisé en ce que** pour déterminer un risque d'inférence d'une situation analogue à une collision il comporte en outre les étapes consistant à :
déterminer si l'allumage du véhicule a été rendu actif, et
aménager lesdits moyens intégrés pour déterminer un risque d'inférence d'une situation analogue à une collision pour interpréter une détermination ultérieure indiquant que ledit bus de véhicule a souffert d'un mauvais fonctionnement ou d'un défaut inattendu tel qu'une situation analogue à une collision.

14. Procédé selon l'une quelconque des revendications 8 à 12,
**caractérisé en ce que** pour déterminer le risque d'inférence d'une situation analogue à une collision il comporte en outre les étapes consistant à :
déterminer si l'allumage du véhicule a été rendu actif et le véhicule après ceci a été mis en mouvement, et
aménager lesdits moyens intégrés pour déterminer un risque d'inférence d'une situation analogue à une collision pour interpréter par la suite une détermination indiquant que ledit bus de véhicule a souffert d'un mauvais fonctionnement ou d'un défaut inattendu tel qu'une situation analogue à une collision.

15. Véhicule automobile,
**caractérisé en ce qu'**il comporte un système (1) selon l'une quelconque des revendications 1 à 7.
